# EUROPÄISCHE PATENTANMELDUNG

(11) **EP 1 172 636 A2**
(43) Veröffentlichungstag der Anmeldung: **16.01.2002**
(21) Anmeldenummer: 01114454.0
(22) Anmeldetag: 15.06.2001
(51) Int. Cl.: G01D 11/28

(54) **Sensor**

(30) Priorität: 12.07.2000 DE 10033431
(71) Anmelder: SICK AG, 79183 Waldkirch (DE)
(72) Erfinder: Füger, Bernhard, 77704 Oberkirch (DE)
(74) Vertreter: Goy, Wolfgang, Dipl.-Phys.

(57) **Zusammenfassung**

Ein Sensor weist ein Sensorgehäuse 1 sowie eine Befestigungseinrichtung 10 zum Befestigen des Sensors an einem Trägerelement 3 auf. Die Befestigungseinrichtung 10 besitzt ein Gelenk 9 insbesondere in Form eines Kugelgelenks. Dieses ist im innern des Sensorgehäuses 1 integriert.

## Beschreibung

Die Erfindung betrifft einen Sensor nach dem Oberbegriff des Anspruchs 1.

Konkret geht es um die Befestigung von Sensoren, beispielsweise von opto-elektronischen Sensoren an einem Trägerelement, beispielsweise an einem Stab, einem Rohr oder an einer Platte. Als Befestigungseinrichtungen werden bisher zusätzliche Träger verwendet, an denen das Sensorgehäuse beispielsweise mittels eines Kugelgelenks beweglich angeordnet werden kann. Nachdem die gewünschte Ausrichtung des Sensors eingestellt worden ist, wird das Gelenk fixiert.

Die bekannten Befestigungseinrichtungen für Sensoren sind von der Montage her aufwendig. Vor allem aber haben die bekannten Befestigungseinrichtungen den Nachteil, daß das Kugelgelenk an einer Art Gestell an dem Trägerelement befestigt ist, was zur Folge hat, daß das Sensorgehäuse relativ weit vom Montagepunkt absteht.

Davon ausgehend liegt der Erfindung die Aufgabe zugrunde, eine verbesserte Befestigung eines Sensors an einem Trägerelement zu schaffen.

Die technische Lösung ist gekennzeichnet durch die Merkmale im Kennzeichen des Anspruchs 1.

Die Grundidee der erfindungsgemäßen Befestigung des Sensors an einem Trägerelement besteht darin, die Befestigungseinrichtung mit ihrem Gelenk ins Innere des Sensorgehäuses zu verlagern. Dies hat den Vorteil, daß der Sensor einschließlich der Befestigungseinrichtung mit dem Gelenk sehr kompakt baut und daß der Abstand des Sensors vom Trägerelement auf ein Minimum reduziert werden kann, wobei der Mindestabstand von dem gewünschten Verschwenkbereich des Sensorgehäuses vorgegeben ist. Schließlich können für die Befestigungseinrichtung Elemente des Sensorgehäuses verwendet werden, was den konstruktiven Aufwand verringert.

Bei dem Gelenk handelt es sich gemäß Anspruch 2 vorzugsweise um ein Kugelgelenk. Dadurch ist es möglich, die Ausrichtung des Sensors in drei Freiheitsgraden zu verändern. Für einfachere Anwendungen und Einstellnotwendigkeiten des Sensors ist es aber auch denkbar, als Gelenk eine Art Drehgelenk mit einem Freiheitsgrad vorzusehen, mittels dem somit der Sensor auf einer Kreisbahn verschwenkt werden kann.

Die bevorzugte technische Realisierung der Befestigungseinrichtung ist gekennzeichnet durch die Merkmale im Anspruch 3. Die Grundidee besteht darin, zum Fixieren des Sensorgehäuses auf dem integrierten Gelenk das Gelenkverschwenkteil beim Anziehen der Schraube insbesondere mittels eines Keilelements so zu weiten, daß in der Gelenkpfanne eine kraftschlüssige Flächenpressung entsteht, welche das Sensorgehäuse fixiert. Dies stellt eine technisch einfache Möglichkeit der Fixierung des Sensorgehäuses dar, nachdem der Sensor zuvor ausgerichtet worden ist. Sofern es sich bei dem Gelenk um ein Kugelgelenk handelt, ist das Gelenkverschwenkteil durch eine Kugel gebildet. Sofern es sich alternativ bei dem Gelenk um eine Art Drehgelenk mit einem Freiheitsgrad handelt, kann als Gelenkverschwenkteil eine Art Hohlzylinder verwendet werden.

Die Weiterbildung gemäß Anspruch 4 betrifft die konstruktive Ausgestaltung der Gelenkpfanne, indem sie durch Rippen gebildet ist, welche abwechselnd an den Axialenden Erhebungen aufweisen. Dadurch ist eine technisch einfache Möglichkeit zum Spritzgießen des Sensorgehäuses gegeben.

Die Weiterbildung gemäß Anspruch 5 hat den Vorteil, daß dadurch eine einfache Möglichkeit geschaffen ist, um das Kugelverschwenkteil (bei einem Kugelgelenk die Kugel) aufzuweiten. Durch Eindrehen und Anziehen der Schraube werden die länglichen Zungen radial nach außen gespreizt, ohne daß durch den Aufweitvorgang des Gelenkverschwenkteils dieses beschädigt wird.

Die Weiterbildung gemäß Anspruch 6 hat den Vorteil, daß dadurch eine stabile Konstruktion der Befestigungseinrichtung mit der Schraube, dem Gelenkverschwenkteil sowie mit dem Sensorgehäuse geschaffen wird. Insbesondere ist durch das mit einem Fortsatz über die Oberseite des Sensorgehäuses überstehende Gelenkverschwenkteil ein vordefinierter Abstand zwischen dem Trägerelement und dem Sensorgehäuse gewährleistet.

Die Weiterbildung gemäß Anspruch 7 hat den Vorteil, daß dadurch eine Verdrehsicherung geschaffen ist, wenn es sich bei dem Trägerelement um eine Stange oder dgl. handelt.

Eine bevorzugte Weiterbildung zum Aufweiten des Gelenkverschwenkteils schlägt Anspruch 8 vor. Es ist zwar denkbar, die Schraube mit einem konischen Schaft auszubilden, so daß beim Anziehen das Gelenkverschwenkteil aufgeweitet wird, doch schlägt die Weiterbildung vor, ein separates Keilelement (bei einem Kugelgelenk einen Kegel) zu verwenden. Dies macht es möglich, eine Schraube mit einem zylindrischen Schaft zu verwenden.

Die Weiterbildung gemäß Anspruch 9 geht von dem Gedanken einer Montageeinheit aus. Es ist zwar möglich, das Keilelement als separates Einzelteil bezüglich des Gelenkverschwenkteils auszubilden. Die Weiterbildung schlägt jedoch vor, das Keilelement an dem Gelenkverschwenkteil anzuspritzen. Für die Montage ist es dann lediglich erforderlich, bei diesem einstückig gespritzten Element, bestehend aus den Einzelelementen Keilelement und Gelenkverschwenkteil, das Keilelement etwas in das Gelenkverschwenkteil hineinzudrücken, so daß der Verbindungssteg bricht und somit die gewünschten beiden separaten Teile entstehen.

Eine weitere Weiterbildung gemäß Anspruch 10 geht ebenfalls von der Erkenntnis einer vereinfachten Montage aus. Es ist zwar möglich, das Gelenkverschwenkteil in die Gelenkpfanne (nachträglich) einzulegen bzw. einzupressen, doch schlägt die Weiterbildung vor, das Gelenkverschwenkteil in die Gelenkpfanne einzuspritzen. Dies ist mittels der heutigen 2-Komponenten-Spritztechnik möglich, ohne daß die zweite Kunststoffkomponente des Gelenkverschwenkteils an der Kunststoffkomponente der Gelenkpfanne haften bleibt.

Weiterhin schlägt die Weiterbildung gemäß Anspruch 11 vor, daß die Durchgangsöffnung des Gehäuses entfernbare Abdeckungen aufweist. Die Grundidee ist dabei folgende: Das Sensorgehäuse mag Befestigungselemente haben, mittels denen das Sensorgehäuse an einer vorgegebenen Position befestigt werden kann, wobei in diesem Fall eine Positionsverstellung nicht notwendig und nicht vorgesehen ist. Beispielsweise kann das Sensorgehäuse Schraubenöffnungen aufweisen. Sofern aber eine Positionseinstellung des Sensors notwendig ist, werden die beiden Abdeckungen entfernt, so daß die Gelenkbefestigung zugänglich ist und mittels dieser der Sensor an dem Trägerelement befestigt werden kann. Hier ist es denkbar, entweder die notwendigen Elemente, nämlich das Gelenkverschwenkteil sowie das Keilelement, in die Durchgangsöffnung des Sensorgehäuses nachträglich einzufügen. Oder es ist auch denkbar, das Gelenkverschwenkteil sowie das Keilelement vormontiert bereits in das Sensorgehäuse einzusetzen, so daß nach dem Entfernen der Abdeckungen lediglich die Schraube eingesetzt und angezogen werden muß.

Die Weiterbildung gemäß Anspruch 12 schließlich hat den Vorteil, daß die Befestigung des Sensorgehäuses am Trägerteil von beiden Seiten her möglich ist.

Ein Ausführungsbeispiel eines erfindungsgemäßen Sensors wird nachfolgend anhand der Zeichnungen beschrieben. In diesen zeigt:

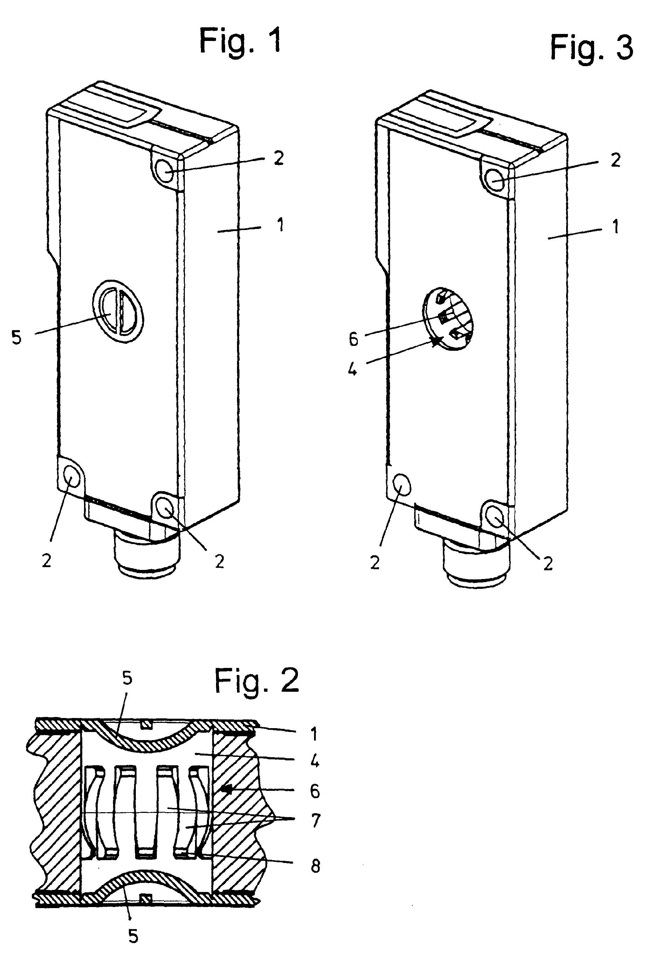

- Fig. 1: eine perspektivische Ansicht des Sensors im herstellungsseitigen Grundzustand;
- Fig. 2: ein vergrößerter Detailschnitt durch den Sensor in Fig. 1 im Bereich der Abdeckungen;
- Fig. 3: den Sensor entsprechend der Darstellung in Fig. 1, jedoch nach dem Entfernen der Abdeckungen;

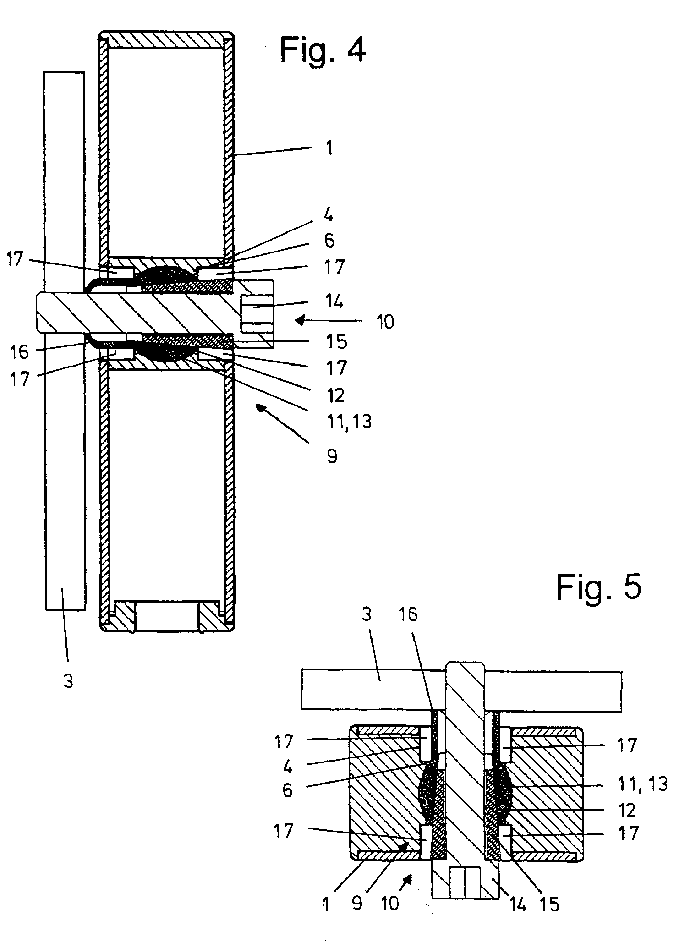

- Fig. 4: einen Längsschnitt durch den Sensor nach der Montage;
- Fig. 5: einen Querschnitt durch den Sensor nach der Montages;
- Fig. 6: eine schematische Ansicht des an einem Stab als Trägerelement befestigten Sensors;
- Fig. 7: eine Befestigung des Sensors an einem plattenförmigen Trägerelement mit einer Winkelverstellung.

Ein Sensor weist ein quaderförmiges Sensorgehäuse 1 auf. Es besitzt in den Eckbereichen drei Öffnungen 2 für eine direkte Schraubbefestigung des Sensorgehäuses 1 an einem Trägerelement 3.

Außerdem weist das Sensorgehäuse 1 im mittleren Bereich eine Durchgangsöffnung 4 auf. Diese ist an den beiden Seiten des Sensorgehäuses 1 jeweils mit einer Abdeckung 5 versehen, welche entweder an das Sensorgehäuse 1 angespritzt oder in die Durchgangsöffnung 4 eingeschraubt ist. Im Inneren der Durchgangsöffnung 4 ist eine Gelenkpfanne 6 definiert. Diese ist um den Umfang herum durch in Axialrichtung der Durchgangsöffnung 4 verlaufende, beabstandete Rippen 7 gebildet, wobei diese Rippen 7 abwechselnd an dem einen Ende sowie an dem anderen Ende Erhebungen 8 aufweisen.

Das Innere des Sensorgehäuses 1 definiert ein Gelenk 9 einer Befestigungseinrichtung 10 zum Befestigen des Sensorgehäuses 1 am Trägerelement 3. Bei dem Gelenk 9 handelt es sich in dem vorliegenden Ausführungsbeispiel um ein Kugelgelenk.

Das Gelenk 9 weist - außer der bereits beschriebenen Gelenkpfanne 6 - ein Gelenkverschwenkteil 11 in Form einer Gelenkkugel auf. Dieses Gelenkverschwenkteil 11 besitzt eine zu der Durchgangsöffnung 4 kolineare Durchgangsöffnung 12. Außerdem weist das Gelenkverschwenkteil 11 in Achsrichtung verlaufende Zungen 13 auf, d.h. die Kugel ist mit Schlitzen versehen. In die Durchgangsöffnung 12 des Gelenkverschwenkteils 11 ist eine Schraube 14 hindurchgesteckt. Zwischen dem Zylinderschaft der Schraube 14 und der Innenbohrung des Gelenkverschwenkteils 11 befindet sich ein Keilelement 15 in Form eines Kegels.

Die Funktionsweise der Befestigungseinrichtung 10 für den Sensor ist wie folgt:

Sofern das Sensorgehäuse 1 nicht über die Öffnungen 2 mit dem Trägerelement 3 verschraubt wird bzw. verschraubt werden kann (wenn nämlich eine Ausrichtung des Sensors notwendig ist), werden die Abdeckungen 5 entfernt, beispielsweise herausgebrochen. Anschließend wird das Gelenkverschwenkteil 11 in Form der Kugel in die Gelenkpfanne 6 eingesetzt. Danach wird die Schraube 14 zusammen mit dem Keilelement 15 hindurchgesteckt. Dadurch ist der Sensor montagefertig.

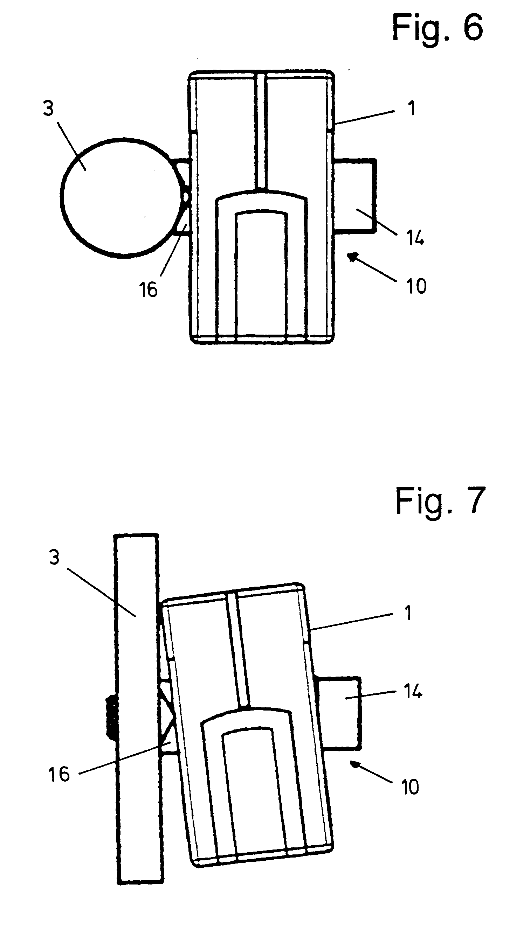

Die Schraube 14 wird in das zugehörige Muttergewinde des Trägerelements 3 eingeschraubt, bis ein Fortsatz 16 des Gelenkverschwenkteils 11 an dem Trägerelement 3 zur Anlage kommt. Das am Trägerelement 3 anliegende vordere Ende des Fortsatzes 16 weist dabei eine konkave Ausnehmung in der Art einer V-förmigen Nut auf, in welcher die nicht ebene Oberseite beispielsweise einer Stange verdrehsicher zu liegen kommt (Fig. 6). Außerdem weist dieses vordere Ende des Fortsatzes 16 zusätzlich zur konkaven Ausnehmung im seitlichen Begrenzungsbereich dieser Ausnehmung eine plane Anlagefläche für ebene Trägerelemente 3 auf (Fig. 7). In dieser Position kann das Sensorgehäuse 1 auf dem Gelenk 9 in die gewünschte Position in allen drei Raumachsen ausgerichtet werden. Um eine Verstellbewegung überhaupt zu ermöglichen, weist das Sensorgehäuse 1 zum einen beidseits des Gelenks 9 jeweils eine Ringausnehmung 17 auf und zum anderen besitzt das Sensorgehäuse 1 einen Abstand zum Trägerelement 3, welcher durch den überstehenden Fortsatz 16 des Gelenkverschwenkteils 11 definiert ist. Sobald die gewünschte Richtung eingestellt ist, wird die Schraube 14 angezogen. Dadurch werden die Zungen 13 des Gelenkverschwenkteils 11 gespreizt und aufgeweitet, so daß in der Gelenkpfanne 6 eine Flächenpressung entsteht, welche den Sensor fixiert. Durch kurzzeitiges Lockern der Schraube 14 kann der Sensor neu ausgerichtet werden.

### Bezugszeichenliste

- 1: Sensorgehäuse
- 2: Öffnung
- 3: Trägerelement
- 4: Durchgangsöffnung
- 5: Abdeckung
- 6: Gelenkpfanne
- 7: Rippe
- 8: Erhebung
- 9: Gelenk
- 10: Befestigungseinrichtung
- 11: Gelenkverschwenkteil
- 12: Durchgangsöffnung
- 13: Zunge
- 14: Schraube
- 15: Keilelement
- 16: Fortsatz
- 17: Ringausnehmung

## Patentansprüche

1. Sensor
mit einem Sensorgehäuse (1) sowie
mit einer ein Gelenk (9) aufweisenden Befestigungseinrichtung (10) zum Befestigen des Sensorgehäuses (1) an einem Trägerelement (3),
**dadurch gekennzeichnet,**
**daß** das Gelenk (9) der Befestigungseinrichtung (10) im Inneren des Sensorgehäuses (1) integriert ist.

2. Sensor nach dem vorhergehenden Anspruch,
**dadurch gekennzeichnet,**
**daß** das Gelenk (9) ein Kugelgelenk oder eine Art Drehgelenk ist.

3. Sensor nach einem der vorhergehenden Ansprüche,
**dadurch gekennzeichnet,**
**daß** das Sensorgehäuse (1) eine Durchgangsöffnung (4) aufweist,
**daß** in der Innenwand dieser Durchgangsöffnung (4) eine Gelenkpfanne (6) ausgebildet ist,
**daß** in dieser Gelenkpfanne (6) ein aufweitbares Gelenkverschwenkteil (11) verschwenkbar angeordnet ist,
**daß** dieses Gelenkverschwenkteil (11) eine zur Durchgangsöffnung (4) des Sensorgehäuses (1) entsprechend ausgerichtete Durchgangsöffnung (12) aufweist und
**daß** durch diese Durchgangsöffnung (12) des Gelenkverschwenkteils (11) hindurch eine Schraube (14) in das Trägerelement (3) eindrehbar ist und dabei während des Anziehens der Schraube (14) das Gelenkverschwenkteil (11) aufgeweitet und dadurch mit der Gelenkpfanne (6) verpreßt wird.

4. Sensor nach Anspruch 3,
**dadurch gekennzeichnet,**
**daß** die Gelenkpfanne (6) durch um den Umfang verteilte, in Axialrichtung der Durchgangsöffnung (4) sich erstreckende Rippen (7) gebildet ist.

5. Sensor nach Anspruch 3 oder 4,
**dadurch gekennzeichnet,**
**daß** das Gelenkverschwenkteil (11) in Axialrichtung der Durchgangsöffnung (12) sich erstreckende Zungen (13) aufweist.

6. Sensor nach einem der Ansprüche 3 bis 5,
**dadurch gekennzeichnet,**
**daß** das Gelenkverschwenkteil (11) mittels eines Fortsatzes (16) am Trägerelement (3) abgestützt ist und
**daß** das Sensorgehäuse (1) einen Abstand zum Trägerelement (3) aufweist.

7. Sensor nach Anspruch 6,
**dadurch gekennzeichnet,**
**daß** das am Trägerelement (3) anliegende vordere Ende des Fortsatzes (16) eine konkave Ausnehmung in der Art einer V-förmigen Nut aufweist.

8. Sensor nach einem der Ansprüche 3 bis 7,
**dadurch gekennzeichnet,**
**daß** zwischen der Schraube (14) und der Innenwand der Durchgangsöffnung (12) des Gelenkverschwenkteils (11) ein Keilelement (15) angeordnet ist, welches beim Eindrehen der Schraube (14) von dieser mitbewegt wird und das Gelenkverschwenkteil (11) aufweitet.

9. Sensor nach Anspruch 8,
**dadurch gekennzeichnet,**
**daß** das Gelenkverschwenkteil (11) und das Keilelement (15) im Ursprungszustand über eine durchbrechbare Verbindungsbrücke miteinander verbunden sind.

10. Sensor nach einem der Ansprüche 3 bis 9,
**dadurch gekennzeichnet,**
**daß** das Gelenkverschwenkteil (11) in die Gelenkpfanne (6) eingespritzt wird.

11. Sensor nach einem der Ansprüche 3 bis 10,
**dadurch gekennzeichnet,**
**daß** die Durchgangsöffnung (4) des Sensorgehäuses (1) entfernbare Abdeckungen (5) aufweist.

12. Sensor nach einem der Ansprüche 3 bis 11,
**dadurch gekennzeichnet,**
**daß** die Durchgangsöffnung (4) des Sensorgehäuses (1) bezüglich der Mittelquerebene symmetrisch ausgebildet ist.
